# DEMANDE DE BREVET EUROPEEN

(11) **EP 3 910 915 A1**
(43) Date de publication de la demande: **17.11.2021**
(21) Numéro de dépôt: 21173359.7
(22) Date de dépôt: 11.05.2021
(51) Int. Cl.: H04L 29/08, G06F 30/15

(54) **PROCÉDÉ DE MITIGATION DE CONTENTIONS POUR UNE APPLICATION OPÉRATIONNELLE, PRODUIT PROGRAMME D'ORDINATEUR ET PROCÉDÉ DE DÉTERMINATION D'UNE APPLICATION STRESSANTE ASSOCIÉS**

(30) Priorité: 13.05.2020 FR 2004691
(71) Demandeur: THALES, 92400 Courbevoie (FR)
(72) Inventeur: LAMOUR, Pierrick, 33700 MERIGNAC (FR); FUMEY, Marc, 31000 TOULOUSE (FR)
(74) Mandataire: Lavoix

(57) **Abrégé**

La présente invention concerne un procédé de mitigation (200) de contentions pour une application opérationnelle mise en œuvre par une plateforme embarquée comprenant une pluralité de cœurs et une pluralité de ressources partagées.

Ce procédé les étapes d'exécution (210) de l'application opérationnelle par l'un des cœurs de la plateforme embarquée, d'exécution (220) d'une application stressante sur au moins certains autres cœurs de la plateforme embarquée en parallèle avec l'application opérationnelle, l'application stressante étant composée d'un ensemble de tâches de contention générant une contention maximale sur des canaux d'interférence, et de détermination (230) de contentions générées par l'application stressante sur l'application opérationnelle.

## Description

La présente invention concerne un procédé de mitigation de contentions pour une application opérationnelle.

La présente invention concerne également un produit programme d'ordinateur et un procédé de détermination d'une application stressante associés à un tel procédé de mitigation.

L'invention est notamment applicable dans le domaine de plateformes embarqués multi-masters, comme par exemple des plateformes embarquées utilisables dans le domaine avionique.

De manière connue en soi, une telle plateforme multi-masters comprend une pluralité de cœurs et une pluralité de ressources partagées, chaque cœur étant apte à exécuter au moins une application en utilisant une ou plusieurs ressources partagées.

Dans ce type de plateformes, l'utilisation des ressources partagées peut engendrer des conflits liés aux accès concurrents par différents cœurs. Ces conflits se traduisent généralement par des durées de fonctionnement de processus non maitrisées. Cela ne permet alors pas de prédire le fonctionnement de la plateforme de manière déterministe, ce qui lui rend inutilisable dans les domaines où la sûreté de fonctionnement est forte.

Dans une plateforme mono-master, ce problème est assez facilement soluble, car tous les accès étant séquentiels, on peut mettre en œuvre des solutions d'ordonnancement temporel réduisant fortement ou supprimant les conflits.

En revanche, dans un contexte multi-masters, aucune solution simple n'apparait face au parallélisme pouvant engendrer des conflits. De nombreuses méthodes existent déjà dans l'état de la technique pour pallier ce problème, sans toutefois réduire ni éliminer les conflits en toutes circonstances.

Ainsi, par exemple, il existe des mécanismes d'accélération permettant d'augmenter des performances d'un ou de plusieurs cœurs d'une plateforme multi-cœurs incluant les bus et les périphériques. Toutefois, ces mécanismes ne permettent que de dissimuler les problèmes de contention compte tenu des limites physiques (taille, performance, etc.) de ces composantes. En effet, en fonction de l'application et en cas de débordement, les problèmes réapparaissent.

Des architectures particulières des cœurs permettent également de limiter les contentions mais comme dans le cas précédent, ont également leurs limites physiques.

L'utilisation d'architectures multi-master pose donc a priori un problème majeur dans son utilisation dans un contexte de haute criticité où le déterminisme est essentiel.

La présente invention a pour but de résoudre ces problèmes, c'est-à-dire de proposer des mécanismes de résolution de contentions dans une plateforme multi-cœurs permettant de rendre déterministe le fonctionnement d'une telle plateforme, et cela sans surdimensionner différentes composantes physiques de celle-ci.

À cet effet, l'invention a pour objet un procédé de mitigation de contentions pour une application opérationnelle mise en œuvre par une plateforme embarquée.

La plateforme embarquée comprend une pluralité de cœurs et une pluralité de ressources partagées, chaque cœur étant apte à exécuter au moins une application en utilisant une ou plusieurs ressources partagées via un canal d'accès établi entre ce cœur et la ressource partagée correspondante permettant l'usage de cette ressource partagée

Le procédé de mitigation comprend les étapes suivantes :
- exécution de l'application opérationnelle par l'un des cœurs de la plateforme embarquée ;
- exécution d'une application stressante sur au moins certains autres cœurs de la plateforme embarquée en parallèle avec l'application opérationnelle, l'application stressante étant composée d'un ensemble de tâches de contention, chaque tâche de contention générant une contention maximale sur un canal d'interférence, le ou chaque canal d'interférence présentant une partie partagée entre plusieurs canaux d'accès à une même ressource partagée ;
- détermination de contentions générées par l'application stressante sur l'application opérationnelle.

Suivant d'autres aspects avantageux de l'invention, le procédé de mitigation comprend une ou plusieurs des caractéristiques suivantes, prise(s) isolément ou suivant toutes les combinaisons techniquement possibles :
- l'application stressante est exécutée sur chaque cœur disponible ;
- l'application stressante est exécutée sur chaque cœur définissant un canal d'interférence avec le cœur exécutant l'application opérationnelle ;
- l'application opérationnelle est exécutée selon son contexte de déploiement final ;
- le procédé comprend une étape de mesure de contentions déterminées.

L'invention a également pour objet un produit programme d'ordinateur comportant des instructions logicielles qui, lorsqu'elles sont exécutées par un ordinateur, mettent en œuvre un procédé de mitigation tel que défini ci-dessus.

L'invention a également pour objet un procédé de détermination d'une application stressante pour une mitigation de contentions dans une plateforme embarquée, la plateforme embarquée comprenant une pluralité de cœurs et une pluralité de ressources partagées, chaque cœur étant apte à exécuter au moins une application en utilisant une ou plusieurs ressources partagées via un canal d'accès établi entre ce cœur et la ressource partagée correspondante permettant l'usage de cette ressource partagée.

Le procédé de détermination comprend les étapes suivantes :
- détermination de canaux d'interférences dans la plateforme embarquée, chaque canal d'interférence présentant une partie partagée entre plusieurs canaux d'accès à une même ressource partagée ;
- pour chaque canal d'interférence, détermination d'une tâche de contention générant une contention maximale sur ce canal d'interférence ;
- détermination de l'application stressante par l'ensemble des tâches de contention générées.

Suivant d'autres aspects avantageux de l'invention, le procédé de détermination comprend une ou plusieurs des caractéristiques suivantes, prise(s) isolément ou suivant toutes les combinaisons techniquement possibles :
- chaque tâche de contention est déterminée en accord avec le domaine d'usage de la plateforme embarquée ;
- chaque canal d'interférence est déterminé en fonction de l'architecture de la plateforme embarquée ;
- chaque tâche de contention est déterminée en fonction des caractéristiques du canal d'interférence correspondant.

Ces caractéristiques et avantages de l'invention apparaitront à la lecture de la description qui va suivre, donnée uniquement à titre d'exemple non limitatif, et faite en référence aux dessins annexés, sur lesquels :
- [Fig 1] la figure 1 est une vue schématique d'une plateforme embarquée pour lequel un procédé de mitigation de contentions selon l'invention est appliqué ;
- [Fig 2] la figure 2 est un organigramme des procédés de mitigation et de détermination d'une application stressante selon l'invention.

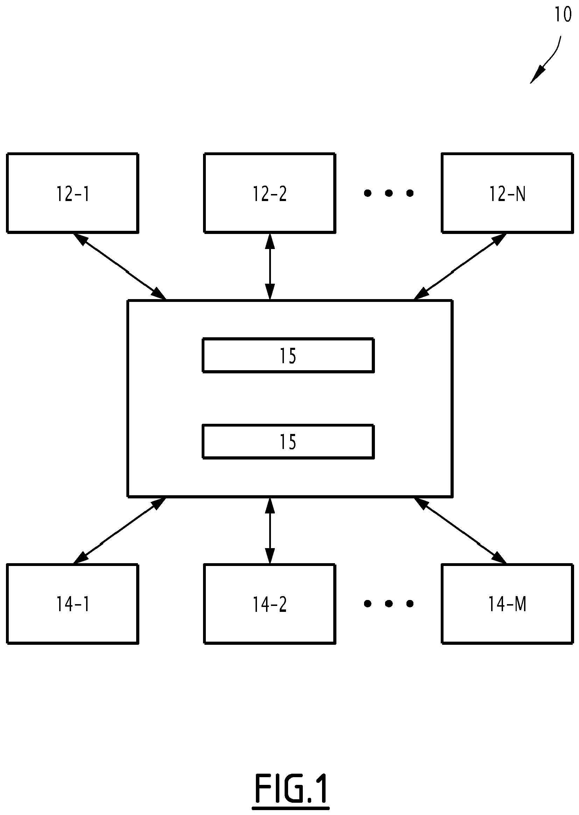

Un exemple d'une plateforme embarquée 10 est en effet illustré sur la figure 1.

Une telle plateforme embarquée 10 présente par exemple un système critique, notamment un système critique avionique. Dans ce dernier cas, la plateforme embarquée 10 est donc configurée pour effectuer une ou plusieurs tâches avioniques.

Dans l'ensemble des cas, la plateforme embarquée 10 est conçue pour fonctionner dans un domaine d'usage particulier. Ce domaine définit donc l'architecture de cette plateforme ainsi qu'au moins certaines caractéristiques de fonctionnement des composantes de cette plateforme. Dans ce cas, le fonctionnement de la plateforme 10 correspond à son fonctionnement nominal.

En référence à la figure 1, la plateforme embarquée comprend N cœurs 12-1, ...,12-N, M ressources 14-1, ...,14-M partagées et un ou plusieurs niveaux d'arbitrage 15 entre les cœurs et les ressources, les nombres M et N étant strictement supérieurs à 1.

Chaque cœur 12-1, ..., 12-N, pouvant être appelé également processeur ou master, est connu en soi. En particulier, chaque cœur 12-1, ...,12-N est apte à exécuter une application en utilisant une ou plusieurs ressources partagées 14-1, ..., 14-M.

Pour ce faire, chaque cœur 12-1, ...,12-N est apte par exemple à envoyer des requêtes vers au moins certaines des ressources partagées 14-1, ... ,14-M et à recevoir des réponses à ces requêtes.

Dans la suite, les applications exécutées par les cœurs 12-1, ...,12-N dans le cas d'un fonctionnement nominal de la plateforme seront appelées applications opérationnelles. Par exemple, lorsque la plateforme 10 présente un système avionique, les applications opérationnelles présentent des applications configurées pour mettre en œuvre différentes tâches avioniques assurées par un tel système.

Chaque ressource partagée 14-1, ...,14-M présente une composante matérielle et/ou éventuellement logicielle, permettant aux cœurs 12-1, ...,12-N d'exécuter les applications.

À titre d'exemple, ces ressources partagées 14-1, ..., 14-M comprennent un espace de stockage, une mémoire vive, et/ou tout autre périphérique connu en soi.

En outre, chaque ressource partagée 14-1, ...,14-M est définie par au moins une caractéristique de son fonctionnement. Une telle caractéristique peut par exemple concerner une capacité de traitement de données par la ressource correspondante, telle que par exemple la vitesse d'écriture, la vitesse de lecture, le débit assuré, la taille de sa mémoire tampon, etc.

Chaque cœur 12-1, ...,12-N est apte à utiliser une ou plusieurs ressources partagées 14-1, ..., 14-M via un ou plusieurs niveaux d'arbitrage 15 connus en soi.

En particulier, chaque niveau d'arbitrage 15 se présente par exemple sous la forme d'un ou de plusieurs bus d'accès permettant de contrôler les droits d'accès de chaque cœur 12-1, ..., 12-N à chaque ressource 14-1, ...,14-M.

Sur la figure 1, deux niveaux d'arbitrage sont illustrés.

Tout comme les ressources, chaque niveau d'arbitrage 15 est défini également par une ou plusieurs caractéristiques, telles que la vitesse de transmission, le débit, etc.

Les niveaux d'arbitrage 15 permettent ainsi de définir des canaux d'accès des cœurs 12-1, ...,12-N aux ressources 14-1, ...,14-N.

En particulier, par « canal d'accès », on entend une association d'un cœur 12-1, .., 12-N et d'une ressource partagée 14-1, ...,14-M rendant utilisable cette ressource par ce cœur.

Ainsi, un canal d'accès peut par exemple présenter un canal de communication de données entre le cœur et la ressource correspondants, ces données étant utilisables pour exécuter une application par le cœur.

Les canaux d'accès sont définis par l'architecture de la plateforme 10, au stade de la conception de celle-ci.

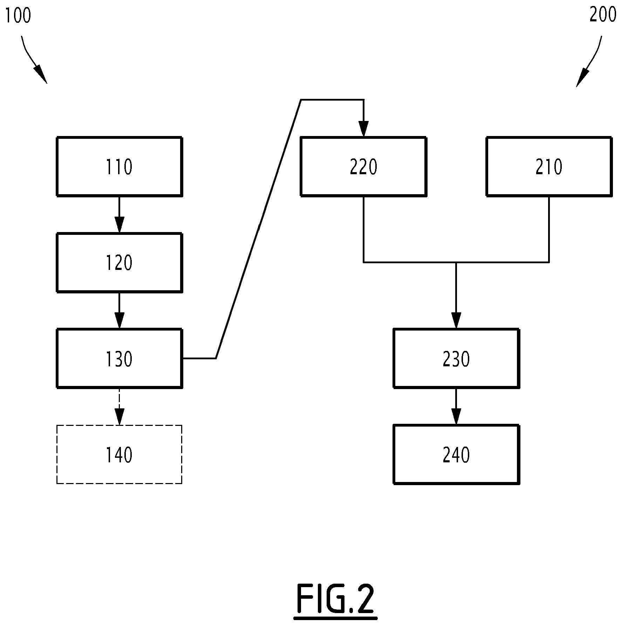

Le procédé de détermination 100 d'une application stressante utilisable pour une mitigation de contentions dans la plateforme 10 sera désormais expliqué en référence à la figure 2 présentant dans sa partie gauche un organigramme de ce procédé.

Ce procédé de détermination 100 est par exemple mis en œuvre avant l'utilisation nominale de la plateforme 10 mais après la conception de celle-ci. Autrement dit, au moment de la mise en œuvre du procédé de détermination 100, l'architecture de la plateforme 10 ainsi que les caractéristiques de l'ensemble de ses composantes sont déjà connues.

Selon un autre exemple de réalisation, ce procédé 100 est mis en œuvre avant le choix de l'architecture définitive de la plateforme 10. Dans un tel cas, ce procédé peut être mis en œuvre plusieurs fois afin de déterminer au mieux une telle architecture définitive. Ainsi, par exemple, pour les différentes itérations du procédé, il est possible d'utiliser des architectures différentes et éventuellement des caractéristiques différentes de ses composantes. L'architecture retenue après ces itérations, sera par exemple celle qui présente les meilleures performances en pire cas ou la meilleure maitrise des canaux d'interférence.

Lors d'une étape initiale 110 de ce procédé 100, l'ensemble des canaux d'interférence sont déterminés.

En particulier, par « canal d'interférence », on entend une partie commune à plusieurs canaux d'accès à une ressource partagée rendant possible l'influence d'un cœur sur un autre dans l'exécution des applications opérationnelles.

Ainsi, par exemple, deux canaux d'accès à une même ressource 14-1, ...,14-N à partir de deux cœurs différents 12-1, ..., 12-N passant par un même niveau d'arbitrage 15 forment un tel canal d'interférence.

Selon un autre exemple, deux accès à une ressource 14-1, ...,14-N par un canal à partir de deux cœurs différents passant par un même niveau d'arbitrage forment également un canal d'interférence.

Cette étape 110 est par exemple mise en œuvre en analysant un modèle reproduisant l'architecture de la plateforme embarquée 10. Cette analyse est confortée par un logiciel d'analyse conçu à cet effet.

Lors d'une étape 120 suivante, pour chaque canal d'interférence, une tâche de contention générant une contention maximale pour ce canal d'interférence est générée.

Pour ce faire, par exemple un logiciel conçu à cet effet analyse les caractéristiques de l'ensemble des composantes formant le canal d'interférence correspondant.

Ainsi, chaque tâche de contention est conçue pour générer un maximum de contentions dans le domaine d'usage de la plateforme 10.

Par exemple, lorsqu'un canal d'interférence présente un canal de communication de données à une mémoire partagée, la tâche de contention générée pour ce canal pourrait consister en une transmission déterministe de données en utilisant entièrement la bande passante de ce canal.

Lors d'une étape 130 suivante, une application stressante est déterminée par l'ensemble des tâches de contention générées lors de l'étape 120.

En variante, plusieurs applications stressantes peuvent être déterminées lors de cette étape par des groupes différents de tâches de contention. Ces groupes sont par exemple déterminés en fonction de critères prédéterminés. Ainsi, par exemple, un groupe peut être constitué de l'ensemble des tâches de contention générées pour les canaux d'interférence relatifs à un même cœur ou à une même ressource.

Puis, lors d'une étape 140 optionnelle, l'application stressante obtenue est vérifiée et testée, par exemple par un logiciel de test conçu à cet effet. Ces tests peuvent par exemple comprendre des mesures de contentions effectives générées par cette application lors de son exécution pour au moins certains des cœurs 12-1, ..., 12-N.

En outre, pour chaque ressource 14-1, ...,14-N, un abaque montrant le taux de contention en fonction du taux de son usage peut être généré.

Le procédé de mitigation 200 utilisant une ou plusieurs applications stressantes telles que déterminées par le procédé de détermination 100 sera désormais expliqué en référence à la figure 2 présentant dans sa partie droite un organigramme de ce procédé.

Ce procédé de mitigation 200 est mis en œuvre en relation avec chaque application opérationnelle devant être déployée sur la plateforme 10. Autrement dit, lorsque plusieurs applications opérationnelles sont à déployer sur la plateforme, le procédé de mitigation 200 est mis en œuvre pour chacune d'entre elles de manière consécutive.

En outre, ce procédé est par exemple mis en œuvre par un logiciel de mitigation de contentions conçu à cet effet ou par un système de mitigation de contentions externe à la plateforme 10.

Lors d'une étape initiale 210 de ce procédé 200, l'application opérationnelle correspondante est exécutée par l'un des cœurs 12-1, ..., 12-N.

Avantageusement, cette exécution est effectuée dans le contexte de déploiement final temporel et spatial de l'application opérationnelle. Autrement dit, cette application opérationnelle est exécutée en utilisant les mêmes paramètres d'exécution que dans le cas du fonctionnement nominal de la plateforme 10.

Lors de l'étape 220 mise en œuvre en parallèle avec l'étape 210, l'application stressante est exécutée sur au moins certains autres cœurs 12-1, ..., 12-N de la plateforme embarquée 10.

Cette application stressante est par exemple exécutée sur chaque cœur disponible de la plateforme 10.

Avantageusement, lors de cette étape, l'application stressante est exécutée sur chaque cœur 12-1, ..., 12-N définissant un canal d'interférence avec le cœur exécutant l'application opérationnelle.

Lorsque plusieurs applications stressantes ont été déterminées par le procédé de détermination 100, seules les applications partageant le même canal d'interférence avec l'application opérationnelle sont par exemple exécutées. En variante, l'ensemble des applications stressantes sont exécutées.

Lors de l'étape 230 suivante, les contentions générées par l'application stressante sur l'application opérationnelle sont déterminées.

Lors de l'étape 240 suivante, les contentions déterminées lors de l'étape 230 sont mesurées.

Ces mesures peuvent par exemple comprendre des mesures de la durée de chaque contention.

Par construction de l'application stressante, ces mesures correspondent donc à un mode de fonctionnement pire cas de l'application opérationnelle. Ces mesures sont alors utilisables pour dimensionner l'application opérationnelle et pour prédire par exemple son temps d'exécution maximal lors du fonctionnement nominal de la plateforme 10.

En mettant en œuvre le procédé de mitigation de contentions 200 pour chaque logiciel opérationnel devant être déployé sur la plateforme 10, le fonctionnement de la plateforme 10 est donc rendu complètement déterministe.

Selon l'invention, cela a été atteint par la mise en œuvre d'une application stressante qui place chaque application opérationnelle dans le mode de fonctionnement pire cas indépendamment des autres applications.

Ainsi, lorsque les applications opérationnelles sont déployées simultanément sur la plateforme lors du fonctionnement nominal de la plateforme 10, les contentions mutuelles générées ne peuvent pas dépasser les contentions mesurées lors de la mise en œuvre du procédé 200. Ainsi, le temps d'exécution de chaque application opérationnelle reste parfaitement prédictible.

L'invention apporte un avantage important pour l'intégration des applications par la capacité de la ou des applications stressantes à produire une situation pire cas. Cela permet alors d'éviter une phase d'intégration commune avec toutes les applications, qui serait nécessaire pour vérifier les applications dans un contexte réel et pire cas sans cette capacité.

Cela permet également d'éviter de surdimensionner les composantes de la plateforme 10 ou de modifier l'architecture des cœurs pour tenir compte d'une réalité plus dure que les conditions de vérification de chaque application opérationnelle, chacune de ces applications ayant été vérifiée dans un contexte démontré comme pire cas.

## Revendications

1. Procédé de mitigation (200) de contentions pour une application opérationnelle mise en œuvre par une plateforme embarquée (10), la plateforme embarquée (10) comprenant une pluralité de cœurs (12-1, ...,12-N) et une pluralité de ressources partagées (14-1, ...,14-M), chaque cœur (12-1, ..., 12-N) étant apte à exécuter au moins une application en utilisant une ou plusieurs ressources partagées (14-1, ...,14-M) via un canal d'accès établi entre ce cœur (12-1, ..., 12-N) et la ressource partagée (14-1, ...,14-M) correspondante permettant l'usage de cette ressource partagée (14-1, ...,14-M) ;
le procédé de mitigation (200) comprenant les étapes suivantes :
- exécution (210) de l'application opérationnelle par l'un des cœurs (12-1, ..., 12-N) de la plateforme embarquée (10) ;
- exécution (220) d'une application stressante sur au moins certains autres cœurs (12-1, ...,12-N) de la plateforme embarquée (10) en parallèle avec l'application opérationnelle, l'application stressante étant composée d'un ensemble de tâches de contention, chaque tâche de contention générant une contention maximale sur un canal d'interférence, le ou chaque canal d'interférence présentant une partie partagée entre plusieurs canaux d'accès à une même ressource partagée ;
- détermination (230) de contentions générées par l'application stressante sur l'application opérationnelle.

2. Procédé de mitigation (200) selon la revendication 1, dans lequel l'application stressante est exécutée sur chaque cœur (12-1, ...,12-N) disponible.

3. Procédé de mitigation (200) selon la revendication 1, dans lequel l'application stressante est exécutée sur chaque cœur (12-1, ..., 12-N) définissant un canal d'interférence avec le cœur (12-1, ..., 12-N) exécutant l'application opérationnelle.

4. Procédé de mitigation (200) selon l'une quelconque des revendications précédentes, dans lequel l'application opérationnelle est exécutée selon son contexte de déploiement final.

5. Procédé de mitigation (200) selon l'une quelconque des revendications précédentes, comprenant en outre une étape (240) de mesure de contentions déterminées.

6. Produit programme d'ordinateur comportant des instructions logicielles qui, lorsqu'elles sont exécutées par un ordinateur, mettent en œuvre un procédé de mitigation (200) selon l'une quelconque des revendications précédentes.

7. Procédé de détermination (100) d'une application stressante pour une mitigation de contentions dans une plateforme embarquée (10), la plateforme embarquée (10) comprenant une pluralité de cœurs (12-1, ...,12-N) et une pluralité de ressources partagées (14-1, ...,14-M), chaque cœur (12-1, ...,12-N) étant apte à exécuter au moins une application en utilisant une ou plusieurs ressources partagées (14-1, ...,14-M) via un canal d'accès établi entre ce cœur (12-1, ...,12-N) et la ressource partagée (14-1, ..., 14-M) correspondante permettant l'usage de cette ressource partagée (14-1, ..., 14-M) ;
le procédé de détermination (100) comprenant les étapes suivantes :
- détermination (110) de canaux d'interférences dans la plateforme embarquée (10), chaque canal d'interférence présentant une partie partagée entre plusieurs canaux d'accès à une même ressource partagée ;;
- pour chaque canal d'interférence, détermination (120) d'une tâche de contention générant une contention maximale sur ce canal d'interférence ;
- détermination (130) de l'application stressante par l'ensemble des tâches de contention générées.

8. Procédé de détermination (100) selon la revendication 7, dans lequel chaque tâche de contention est déterminée en accord avec le domaine d'usage de la plateforme embarquée (10).

9. Procédé de détermination (100) selon la revendication 7 ou 8, dans lequel chaque canal d'interférence est déterminé en fonction de l'architecture de la plateforme embarquée (10).

10. Procédé de détermination (100) selon l'une quelconque des revendications 7 à 9, dans lequel chaque tâche de contention est déterminée en fonction des caractéristiques du canal d'interférence correspondant.
